# EUROPÄISCHE PATENTANMELDUNG

(11) **EP 3 925 818 A1**
(43) Veröffentlichungstag der Anmeldung: **22.12.2021**
(21) Anmeldenummer: 21168952.6
(22) Anmeldetag: 16.04.2021
(51) Int. Cl.: B60L 53/57, B60L 53/30, B60L 53/14, B60L 53/53, B60L 53/18

(54) **STARTHILFEKABEL**

(30) Priorität: 12.05.2020 DE 102020112804
(71) Anmelder: Innogy SE, 45128 Essen (DE); Westnetz GmbH, 44139 Dortmund (DE)
(72) Erfinder: Fuchs, Christopher, 45131 Essen (DE); Schmidgen, Matthias, 56653 Wassenach (DE)
(74) Vertreter: Cohausz & Florack

(57) **Zusammenfassung**

Starthilfekabel für Elektrofahrzeuge umfassend, einen Umrichter, einen ersten, an einem Wechselspannungsausgang des Umrichters angeordneten Kabelabschnitt umfassend zumindest zwei Ausgangsleiter und einen Steuerleiter in einer gemeinsamen Isolation, einen mit den Ausgangsleitern und dem Steuerleiter verbundenen Ladestecker an dem ersten Kabelabschnitt, einen zweiten, an einem Gleichspannungseingang des Umrichters angeordneten Kabelabschnitt umfassend zumindest zwei Eingangsleiter, zwei mit den Eingangsleitern verbundene Anschlussteile an dem zweiten Kabelabschnitt, dadurch gekennzeichnet, dass die Anschlussteile für einen Anschluss an eine Fahrzeugbatterie oder einen Fremdstartstützpunkt eines Fahrzeugs mit einem Verbrennungsmotor eingerichtet sind.

## Beschreibung

Der Gegenstand betrifft ein Starthilfekabel für Elektrofahrzeuge.

Elektrofahrzeuge im gegenständlichen Sinne sind insbesondere batterieelektrische Fahrzeuge (BEV), welche ausschließlich durch einen elektrischen Energiespeicher angetrieben sind. Elektrofahrzeuge im gegenständlichen Sinne können jedoch auch Plug-in-Hybride sein (PHEV), die neben einem elektrischen Energiespeicher einen Speicher für fossile Energieträger oder Wasserstoff aufweisen.

Insbesondere bei den rein batterieelektrischen betriebenen Fahrzeugen oder denen mit Wasserstofftank ist die Gefahr groß, dass der Energiespeicher während einer Fahrt vollkommen geleert wird und ein Nachtanken an einer herkömmlichen Tankstelle unmöglich ist. Ein Nachladen an einer Ladestation ist zwar möglich, aber deren Verbreitung ist stellenweise zu gering.

Solche Fahrzeuge benötigen zwar nur eine kleine Menge elektrischer Energie, um mit geringer Geschwindigkeit und kleiner Leistungsaufnahme zu einer nächsten Ladestation fahren zu können (limp-home). Die notwendige elektrische Energie kann aber nicht über ein herkömmliches Starthilfekabel von einem Fahrzeug mit Verbrennungsmotor bereitgestellt werden.

Bei Fahrzeugen mit Verbrennungsmotor ist eine Starthilfe über ein Überbrückungskabel ohne weiteres möglich. Hierzu werden Batteriepolzangen des Starthilfekabels einerseits bei dem Empfängerfahrzeug und andererseits bei dem Spenderfahrzeug angeschlossen und aufgrund der gleichartigen Energieversorgung, nämlich herkömmlicherweise 12V Gleichspannung, kann ein Startvorgang am Empfängerfahrzeug unter Verwendung der elektrischen Leistung des Spenderfahrzeugs initiiert werden. Im Anschluss daran kann das Empfängerfahrzeug seine Batterie selbst durch seine Lichtmaschine aufladen. Dies ist bei elektrisch betriebenen Fahrzeugen nicht der Fall.

Einerseits werden elektrisch betriebene Fahrzeuge bei unterschiedlichen Spannungsniveaus gegenüber den Bordnetzen von Verbrennungsfahrzeugen betrieben, andererseits ist der reine Starthilfevorgang unzureichend, da ein Nachladen der Batterie des Empfängerfahrzeugs mit Hilfe einer Lichtmaschine nicht möglich ist.

Dem Gegenstand lag daher die Aufgabe zugrunde, eine Ladehilfe für ein Elektrofahrzeug zur Verfügung zu stellen.

Diese Aufgabe wird durch ein Starthilfekabel nach Anspruch 1 gelöst.

Dem Gegenstand liegt die Erkenntnis zugrunde, dass ein Elektrofahrzeug im Falle eines entleerten elektrischen Energiespeichers in der Regel nur wenige Kilometer von einer herkömmlichen Ladestation, sei es öffentlich oder privat, entfernt ist. Die notwendige Wegstrecke zur nächstgelegenen Ladestation kann in der Regel mit wenigen kWh, z.B. auch weniger als 1kWh, elektrischer Energie zurückgelegt werden. Diese Energie kann, wie gegenständlich erkannt wurde, auch über ein Bordnetz eines Fahrzeugs mit Verbrennungsmotor zur Verfügung gestellt werden.

Darüber hinaus lag dem Gegenstand die Aufgabe zugrunde, dass eine solche Starthilfe mit allen herkömmlichen Fahrzeugen mit Verbrennungsmotor möglich sein muss. Die Erfindung macht sich zu Nutze, dass Fahrzeuge mit Verbrennungsmotor freiliegende Batteriepole und/oder Fremdstartstützpunkte im Motorraum und/oder Kofferraum aufweisen. Fahrzeugnutzer haben gelernt, dass am Spenderfahrzeug und am Empfängerfahrzeug jeweils die Batteriepole oder Fremdstartstützpunkte angeklemmt werden müssen. Dieser Vorgang ist bekannt und wird gegenständlich auf ein Starthilfekabel für ein Elektrofahrzeug übertragen.

Gegenständlich wird hierzu vorgeschlagen, dass das Starthilfekabel einen Umrichter aufweist. Ferner wird vorgeschlagen, dass an einem Wechselspannungsausgang des Umrichters ein erster Kabelabschnitt des Starthilfekabels angeordnet ist. Dieser erste Kabelabschnitt umfasst zumindest zwei Ausgangsleiter und einen Steuerleiter in einer gemeinsamen Isolation. Über die Ausgangsleiter wird elektrische Energie vom Umrichter an das Empfängerfahrzeug übertragen. Der Steuerleiter dient zur Kommunikation zwischen dem Umrichter und dem Empfängerfahrzeug.

Der Umrichter simuliert gegenüber dem Empfängerfahrzeug ein herkömmliches Ladegerät oder eine herkömmliche Ladestation, so dass das Empfängerfahrzeug in herkömmlicher Art und Weise einen Ladevorgang initiieren kann. Das Empfängerfahrzeug "sieht" eine Ladestation, über die elektrische Energie bezogen werden kann. Am Empfängerfahrzeug muss keinerlei Anpassung vorgenommen werden, vielmehr kann das Empfängerfahrzeug wie auch mit herkömmlichen Ladestationen kommunizieren. Hierzu kann sich das Empfängerfahrzeug seiner wohlbekannten Protokolle bedienen. Der Umrichter unterstützt die entsprechenden Protokolle, so dass der Umrichter sich gegenüber dem Empfängerfahrzeug als Ladestation "ausweisen" kann.

Ferner ist erkannt worden, dass für die Starthilfe keinerlei mechanische Anpassung am Elektrofahrzeug vorgenommen werden sollte. Daher wird auch vorgeschlagen, dass ein Ladestecker an dem ersten Kabelabschnitt angeordnet ist, wobei der Ladestecker Kontakte für Ausgangsleiter und den Steuerleiter aufweist und diese Kontakte mit Ausgangsleiter und Steuerleiter verbunden sind.

Um die Starthilfe überall verfügbar zu machen, haben die Erfinder auch erkannt, dass hierzu alle herkömmlichen Fahrzeuge mit Verbrennungsmotor eingesetzt werden können sollten. Das heißt, dass an den herkömmlichen Fahrzeugen mit Verbrennungsmotor ebenfalls keine Anpassung notwendig sein darf. Um dies zu erreichen, wird vorgeschlagen, dass an einem Eingang des Umrichters ein zweiter Kabelabschnitt des Starthilfekabels angeordnet ist. Dieser zweite Kabelabschnitt umfasst zwei Energieleiter.

Die beiden Energieleiter können einzeln isoliert und/oder in einer gemeinsamen Isolation geführt sein. An den Energieleitern sind Anschlussteile vorgesehen, die eingerichtet sind, mit einer Fahrzeugbatterie oder einem Fremdstartstützpunkt eines Fahrzeugs mit Verbrennungsmotor angeschlossen zu werden. Das bedeutet, dass an dem Fahrzeug mit Verbrennungsmotor keinerlei Anpassung notwendig ist.

Auch ist es nicht notwendig, wie im Stand der Technik vorgeschlagen, dass das Fahrzeug mit Verbrennungsmotor einen entsprechenden Anschlussstutzen, beispielsweise eine Schuko Steckdose oder dergleichen aufweisen muss. Eine solche Anordnung ist nur in einigen wenigen Fahrzeugen vorhanden, was den Einsatz eines Starthilfekabels stark beschränken würde. Mit dem gegenständlichen Starthilfekabel kann jedes Fahrzeug mit Verbrennungsmotor Starthilfe für ein Fahrzeug mit Elektromotor leisten. Dies ist der große Vorteil der Erfindung gegenüber bisher bekannten Starthilfelösungen für Elektrofahrzeuge. Es ist keinerlei Anpassung an sowohl dem Elektrofahrzeug als auch dem Fahrzeug mit Verbrennungsmotor notwendig und der großflächige Einsatz des gegenständlichen Starthilfekabels ist unmittelbar möglich. Dies schafft eine erheblich höhere Sicherheit für Fahrer von Elektrofahrzeugen gegenüber dem Liegenbleiben. Jedes Fahrzeug mit Verbrennungsmotor kann Starthilfe leisten.

Mit Hilfe des Umrichters ist ein Umwandeln der Spannung am Eingang in eine Spannung am Ausgang des Umrichters möglich. Ausgangsseitig des Umrichters liegt die Spannung als Wechselspannung oder Gleichspannung an. Eingangsseitig des Umrichters liegt die Spannung bevorzugt als Gleichspannung an. Der Umrichter ermöglicht es, die Spannung des Bordnetzes, beispielsweise 12V, 24V oder 48V, welches herkömmliche Spannungen von Bordnetzen von Fahrzeugen mit Verbrennungsmotor sind, in Spannungen für das Laden der Elektrofahrzeuge, beispielsweise 230V AC oder 400V - 800V DC umzuwandeln.

Die Anschlussteile sind, um sie besonders einfach mit dem Batteriepol oder dem Fremdstartstützpunkt des Spenderfahrzeugs verbinden zu können, gemäß einem Ausführungsbeispiel als Batteriepolzange gebildet. Eine Batteriepolzange lässt sich mechanisch an den Batteriepol oder den Fremdstartstützpunkt anklemmen. Dieses mechanische Anklemmen erfolgt in der Art einer Zange, die insbesondere sägezahnförmige Kontakte hat, um auf der Oberfläche des Batteriepols oder des Fremdstartstützpunkts abgelagerte oder entstandene Oxidschichten zu durchbrechen.

Gemäß einem Ausführungsbeispiel wird vorgeschlagen, dass der Umrichter eine Eingangsgleichspannung an den Eingangsleiter in einer Ausgangswechselspannung an den Ausgangsleiter wandelt. Dies ist insbesondere dann sinnvoll, wenn das Empfängerfahrzeug für das Laden mit Wechselspannung eingerichtet ist. Es gibt jedoch auch Empfängerfahrzeuge, die zum Laden mit Gleichspannung eingerichtet sind. Dabei sind Spannungswege von 400V DC bis hin zu 800V DC denkbar. Für diese wird vorgeschlagen, dass der Umrichter einer Eingangsgleichspannung an den Eingangsleitern in eine Ausgangsgleichspannung an den Ausgangsleitern wandelt.

Um die Starthilfefähigkeit möglichst einer breiten Masse zur Verfügung zu stellen, wird auch vorgeschlagen, dass der Umrichter umschaltbar ist zwischen einer Umrichtung DC/DC und einer Wechselrichtung DC/AC gemäß der obigen Ausführungsbeispiele, sodass stets bedarfsgerecht ein Umrichten stattfinden kann.

Die Ausgangsleistung von Starterbatterien von Fahrzeugen mit Verbrennungsmotor ist begrenzt. Kurzzeitig ist jedoch ein hohe Ausgangsleistung möglich, wobei Ströme von 100A und mehr fließen können. Um die Batterie als auch die Lichtmaschine des Spenderfahrzeugs nicht zu schnell zu sehr zu belasten, wird vorgeschlagen, dass der Umrichter eine Eingangsleistung an den Eingangsleitern auf eine Leistung von weniger 3kW, bevorzugt jedoch mehr als 1kW begrenzt. Diese geringe Leistung reicht jedoch aus, dass Empfängerfahrzeug in einer akzeptablem Zeit mit einer ausreichenden Energie zu laden, um dieses zu befähigen bis zum nächsten herkömmlichen Ladepunkt zu fahren. Eine zu geringe Leistung führt jedoch häufig zu einem "einschlafen" des empfangenden Fahrzeugs. Um dies zu verhindern, sollte ein unterer Grenzwert der zur Verfügung gestellten Leistung vorgegeben sein. Eine minimale Leistung von ca. 1,38 kWh hat sich in Versuchen als ausreichend gezeigt. Die minimale Leistung sollte während des gesamten Ladevorgangs nicht unterschritten werden. "Eingeschlafene" Laderegler könnten ggf. bei einer die minimale Leistung wieder überschreitenden Ladeleistung eventuell nicht mehr aktiviert werden und das Fahrzeug wird nicht geladen.

Gemäß einem Ausführungsbeispiel wird vorgeschlagen, dass der Umrichter zum Aushandeln von Ladeparametern mit dem Elektrofahrzeug über die Ausgangsleiter und/oder den Steuerleiter eingerichtet ist. Hier eignen sich insbesondere die Protokolle DIN IEC 61851 und/oder DIN EN ISO 15118. Mit diesen kann der Umrichter gegenüber dem Elektrofahrzeug wie eine Ladestation erscheinen und Ladeparameter aushandeln. Insbesondere kann der Umrichter Ladeleistungen von weniger als 3kW, insbesondere weniger als 1kW signalisieren, abhängig davon, wie er die Ausgangsleistung an dem Spenderfahrzeug, wie oben beschrieben, beschränkt.

Gemäß einem Ausführungsbeispiel wird vorgeschlagen, dass der Umrichter den Ladezustand der Batterie des Spenderfahrzeugs misst und abhängig davon eine Eingangsleistung beschränkt. Insbesondere kann der Umrichter einen Strom und eine Spannung an den Batteriepolen des Spenderfahrzeugs messen und hieraus eine Aussage zu einem Ladezustand treffen. Ist der Ladezustand dabei über einem ersten Grenzwert, z.B. 80%, kann die Eingangsleistung bei einem Wert, z.B. 3KW liegen, ist der Ladezustand dabei unter dem ersten Grenzwert, z.B. 80%, kann die Eingangsleistung bei einem zweiten Wert, z.B. 1KW liegen. Ist der Ladezustand dabei über unter deinem zweiten Grenzwert, z.B. 30%, kann das Laden über diese Batterie durch den Umrichter z.B. unterbunden werden. Der Umrichter kann auch einen Temperaturfühler an zumindest einem der Anschlussteile aufweisen und so die Temperatur der Batterie des Spenderfahrzeugs messen und diese Temperatur für die Bestimmung des Ladezustands nutzen.

Gemäß einem Ausführungsbeispiel wird vorgeschlagen, dass der Umrichter zwischen den Eingangsleitern und den Ausgangsleitern in Durchlassrichtung betrieben ist und zwischen den Ausgangsleitern und den Eingangsleitern in Sperrrichtung betrieben ist. Dies verhindert ein Rückfluss von elektrischer Energie aus dem Energiespeicher des Empfängerfahrzeugs in den Energiespeicher des Spenderfahrzeugs.

Um gegebenenfalls bereitgestellte Energie gegenüber dem Empfänger abrechnen zu können, wird vorgeschlagen, dass in dem Umrichter ein Messzähler eingerichtet, zum Erfassen der von den Eingangsleitern auf die Ausgangsleiter übertragene Energie, angeordnet ist. Eine solche Messeinrichtung kann beispielsweise ein Smartmeter sein. Diese Messeinrichtung kann über Nahfunk oder über ein zellulares Funknetz ausgelesen werden, um die übertragende Energiemenge abzufragen.

Gemäß einem Ausführungsbeispiel wird vorgeschlagen, dass der Umrichter in dem Ladestecker oder den Anschlussteilen integriert ist. Eine solche Integration ist insbesondere vorteilhaft für die Handhabung des Kabels, da keine zusätzliche "Box" am Kabel angeordnet ist, sondern lediglich ausgangsseitig ein Ladestecker und eingangsseitig die Anschlussteile.

Nachfolgend wird der Gegenstand anhand einer Ausführungsbeispiele zeigenden Zeichnung näher erläutert. In der Zeichnung zeigen:
- Fig. 1: einen schematischen Aufbau eines Starthilfekabels gemäß Ausführungsbeispielen;
- Fig. 2: ein Ausgangsleiter mit einem verbundenen Ladestecker gemäß einem Ausführungsbeispiel;
- Fig. 3: ein System mit einem Starthilfekabel gemäß einem Ausführungsbeispiel.

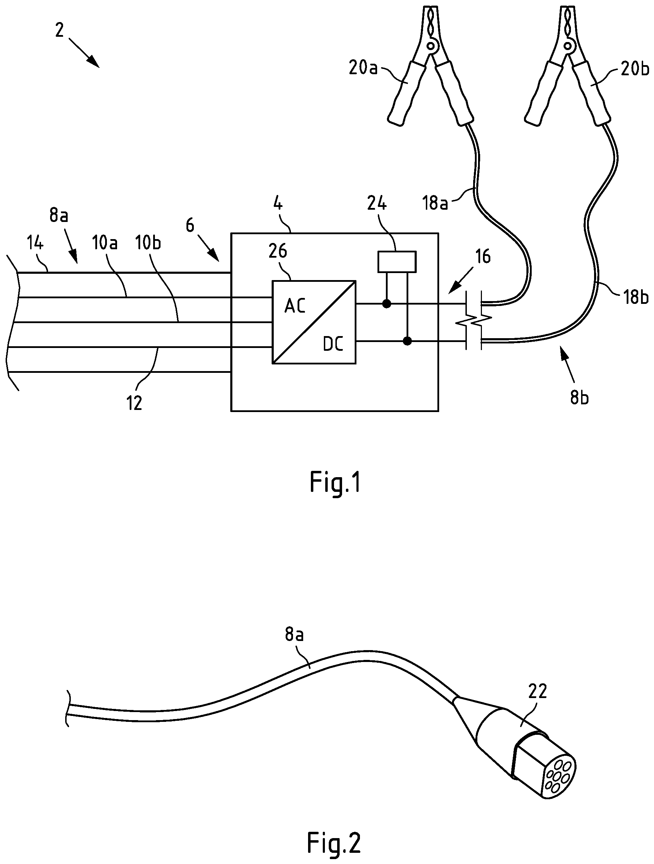

Fig. 1 zeigt ein Teil eines Starthilfekabels 2 mit einem Umrichter 4. An dem Umrichter 4 ist an einem Wechselspannungsausgang 6 ein erster Kabelabschnitt 8a mit zumindest zwei Ausgangsleitern 10a, 10b und einem Steuerleiter 12. Die beiden Ausgangsleiter 10a, b und der Steuerleiter 12 können in einer gemeinsamen Isolation 14 geführt sein.

Auf der anderen Seite des Umrichters, an einem Eingang 16 sind zwei Eingangsleiter 18a, 18b vorgesehen. Die Eingangsleiter 18a, b sind jeweils isoliert und können (nicht dargestellt) zumindest teilweise in einer eigenen Isolation geführt sein.

An einem dem Umrichter 4 gegenüberliegenden Ende der Eingangsleiter 18a, b sind Anschlussteile 20a, 20b vorgesehen. Diese Anschlussteile 20a, b sind zum Anschluss an einen Batteriepol oder einen Fremdstartstützpunkt eines Fahrzeugs mit Verbrennungsmotor gedacht. Insbesondere sind die Anschlussteile 20a, b als Batteriepolzangen gebildet, welche federbelastet an einen Batteriepol oder Fremdstartstützpunkt angeklemmt werden können. Die Eingangsleiter 18a, b bilden einen zweiten Kabelabschnitt 8b.

Ausgangsseitig des ersten Kabelabschnitts 8a kann, wie in der Fig. 2 gezeigt, ein herkömmlicher Ladestecker 22 vorgesehen sein. Dieser Ladestecker 22 kann beispielsweise ein Typ 1 oder ein Typ 2 Stecker, ein CCS-Stecker, ein Chademo-Stecker oder dergleichen sein. Der Stecker 22 kann entsprechende Kontakte aufweisen, wobei ein erster Kontakt mit einem ersten Ausgangsleiter 10a, ein zweiter Kontakt mit einem zweiten Ausgangsleiter 10b und ein dritter Kontakt mit dem Steuerleiter 12 verbunden ist. Der Ausgangsleiter 10a kann beispielsweise eine Wechselstromphase sein und der Ausgangsleiter 10b kann ein Nullleiter sein.

Über den Steuerleiter 12 kann der Umrichter 4 mit dem Elektrofahrzeug kommunizieren. Auch ist eine PWM-Kommunikation über die Ausgangsleiter 10a, b mit dem Elektrofahrzeug möglich. Die Kommunikation ist hinlänglich bekannt und dient zur Abstimmung eines Ladestroms zwischen dem Umrichter 4 und dem empfangenden Elektrofahrzeug.

Innerhalb des Umrichters 4 ist zumindest ein Prozessor 24 vorgesehen. Der Prozessor 24 wird über die an den Eingangsleitern 18a, b anliegende Spannung des spendenden Fahrzeugs gespeist. Unmittelbar nach Anschluss der Anschlussteile 20a, b wird der Prozessor 24 durch die anliegende Spannung aktiviert und beginnt über den Wandler 26 mit dem Elektrofahrzeug zu kommunizieren. Der Wandler 26 ist dabei insbesondere ein DC/AC Wandler, welcher die eingangsseitige Gleichspannung von 12V, 24V oder 48V in eine Ausgangsspannung von 230V bei 50Hz oder 60Hz wandelt. Der Wandler 26 kann auch ein DC/DC Wandler sein, welcher die eingangsseitige Gleichspannung von 12V, 24V oder 48V in eine Ausgangsspannung von 400 V DC bis 800 V DC wandelt.

Das spendende Fahrzeug kann über seine Starterbatterie beispielsweise eine Leistung von 1kW bis 3kW zur Verfügung stellen und beispielsweise in Summe 0,5kWh bis 1kWh zur Verfügung stellen. Diese Energie reicht aus, das empfangende Fahrzeug ausreichend aufzuladen, um zum nächsten Ladepunkt zu gelangen.

Um die bezogene Leistung einstellen zu können, steuert der Prozessor 24 den Wandler 26 an, sodass dieser seinen inneren Widerstand entsprechend einstellt und die Leistung von dem spendenden Fahrzeug abruft.

Über den Wandler 26 wird die empfangene Leistung in eine Ausgangsleistung gewandelt. Die zur Verfügung stehende Ausgangsleistung wird über den Steuerleiter 12 mit dem empfangenen Fahrzeug ausgehandelt. Das empfangene Fahrzeug stellt daraufhin seinen Laderegler entsprechend ein, dass dieser eine entsprechende Leistung bezieht. Über den Wandler 26 fließt somit die elektrische Leistung von dem spendenden Fahrzeug an das empfangende Fahrzeug.

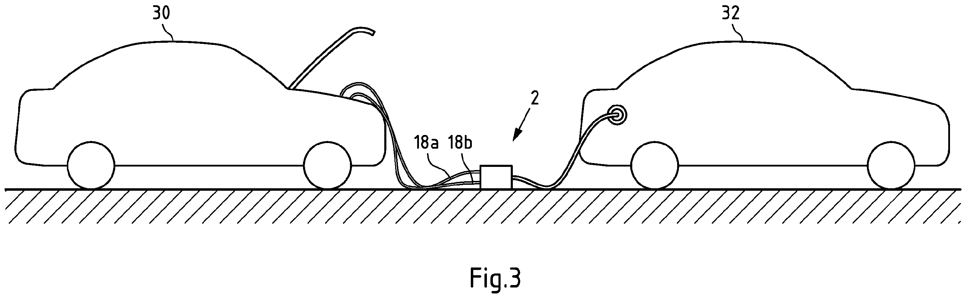

Fig. 3 zeigt beispielhaft ein spendendes Fahrzeug 30 und ein empfangendes Fahrzeug 32. Zwischen diesen Fahrzeugen 30, 32 ist ein Starthilfekabel 2 geschaltet. Zu erkennen ist, dass das Starthilfekabel 2 mit seinen Eingangsleitern 18a, 18b im Motorraum des spendenden Fahrzeugs 30 kontaktiert ist, beispielsweise über Batteriepolzangen, die an den Batteriepolen angeklemmt sind. Das empfangende Fahrzeug 32 empfängt die elektrische Energie von dem spendenden Fahrzeug 30 und lädt seine Antriebsbatterie auf. Nachdem beispielsweise 0,5kWh oder 1kWh übertragen wurden, kann das empfangende Fahrzeug 32 abgekoppelt werden und selbst tätig bis zur nächsten Ladestation fahren und dort weiter laden.

## Patentansprüche

1. Starthilfekabel für Elektrofahrzeuge umfassend,
- einen Umrichter,
- einen ersten, an einem Wechselspannungsausgang des Umrichters angeordneten Kabelabschnitt umfassend zumindest zwei Ausgangsleiter und einen Steuerleiter in einer gemeinsamen Isolation,
- einen mit den Ausgangsleitern und dem Steuerleiter verbundenen Ladestecker an dem ersten Kabelabschnitt,
- einen zweiten, an einem Gleichspannungseingang des Umrichters angeordneten Kabelabschnitt umfassend zumindest zwei Eingangsleiter,
- zwei mit den Eingangsleitern verbundene Anschlussteile an dem zweiten Kabelabschnitt,
**dadurch gekennzeichnet,**
- **dass** die Anschlussteile für einen Anschluss an eine Fahrzeugbatterie oder einen Fremdstartstützpunkt eines Fahrzeugs mit einem Verbrennungsmotor eingerichtet sind.

2. Starthilfekabel nach Anspruch 1,
**dadurch gekennzeichnet,**
- **dass** der Umrichter eine Eingangsspannung an den Eingangsleiters in eine Ausgangsspannung an den Ausgangsleitern wandelt.

3. Starthilfekabel nach einem der Ansprüche 1 oder 2,
**dadurch gekennzeichnet,**
- **dass** die Anschlussteile als Batteriepolzange gebildet sind.

4. Starthilfekabel nach einem vorangehenden Ansprüche,
**dadurch gekennzeichnet,**
- **dass** der Umrichter eine Eingangsgleichspannung an den Eingangsleitern in eine Ausgangswechselspannung an den Ausgangsleitern wandelt oder
- **dass** der Umrichter eine Eingangsgleichspannung an den Eingangsleitern in eine Ausgangsgleichspannung an den Ausgangsleitern wandelt.

5. Starthilfekabel nach einem vorangehenden Ansprüche,
**dadurch gekennzeichnet,**
- **dass** der Umrichter eine Eingangsleistung an den Eingangsleitern auf eine Leistung von weniger als 3kW, bevorzugt weniger als 1kW begrenzt.

6. Starthilfekabel nach einem vorangehenden Ansprüche,
**dadurch gekennzeichnet,**
- **dass** der Umrichter zum Aushandeln von Ladeparametern mit dem Elektrofahrzeug über die Ausgangsleiter und/oder den Steuerleiter nach DIN IEC 61851 und/oder DIN EN ISO 15118 eingerichtet ist.

7. Starthilfekabel nach einem vorangehenden Ansprüche,
**dadurch gekennzeichnet,**
- **dass** der Umrichter von den Eingangsleitern zu den Ausgangsleitern in Durchlassrichtung betrieben ist und von den Ausgangsleitern zu den Eingangsleitern in Sperrrichtung betrieben ist.

8. Starthilfekabel nach einem vorangehenden Ansprüche,
**dadurch gekennzeichnet,**
- **dass** in dem Umrichter ein Messzähler eingerichtet zum Erfassen der von den Eingangsleitern auf die Ausgangsleiter übertragenen Energie angeordnet ist.

9. Starthilfekabel nach einem vorangehenden Ansprüche,
**dadurch gekennzeichnet,**
- **dass** der Umrichter in dem Ladestecker oder den Anschlussteilen integriert ist.
